(19) Europäisches Patentamt / European Patent Office / Office européen des brevets

(11) **EP 2 660 935 A1**

(12) **EUROPEAN PATENT APPLICATION**
published in accordance with Art. 153(4) EPC

(43) Date of publication:
06.11.2013 Bulletin 2013/45

(51) Int Cl.:
*H01R 12/71* (2011.01)     *H01R 13/11* (2006.01)
*H01R 13/24* (2006.01)     *H01R 13/46* (2006.01)

(21) Application number: 11853397.5

(22) Date of filing: 28.09.2011

(86) International application number:
PCT/JP2011/072240

(87) International publication number:
WO 2012/090561 (05.07.2012 Gazette 2012/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 28.12.2010 JP 2010291981

(71) Applicant: Murata Manufacturing Co., Ltd.
Nagaokakyo-shi, Kyoto 617-8555 (JP)

(72) Inventor: URATANI Chikara
Nagaokakyo-shi
Kyoto 617-8555 (JP)

(74) Representative: Reeve, Nicholas Edward
Reddie & Grose LLP
16 Theobalds Road
London WC1X 8PL (GB)

(54) **RECEPTACLE AND CONNECTOR**

(57) There is provided a receptacle that can have a strong force of mating with a plug and can achieve thickness reduction.

A plug (10) is rectangular. A main body (21) has an opening (O) surrounded by sides (k to n) such that the plug (10) is to be attached therein. Holding members (70 to 73) are located at opposite ends of the sides (m, n) to fix the plug (10). Spring terminals (23a, 23b) are electrically connected to the plug (10), and are U-shaped to have turn-back portions when viewed from above. Distal ends of the turn-back portions are located at positions. shifted outward from the opening (O) more than the side m, and contact portions (90a, 90b) are located in the opening (O) when viewed from above. Fixed portions (92a, 92b) are located at positions shifted outward from the opening (O) more than the side (k) when viewed from above. Portions of the spring terminals (23a, 23b) opposed to the holding members (71, 73) are bent in a direction away from the holding members (71, 73).

FIG. 2

**Description**

Technical Field

The present invention relates to a receptacle and a connector, and more particularly, to a receptacle and a connector used to transmit signals through an optical fiber.

Background Art

As a connector of the related art, for example, a connector described in Patent Document 1 is known. Fig. 12 is an external perspective view of a connector 500 described in Patent Document 1.
As illustrated in Fig. 12, the connector 500 includes a plug-side connector 520 and a receptacle-side connector 540 that are attachable to and detachable from each other, electric wires 550, and an IC driver 560. The plug-side connector 520 is provided at one end of an optical fiber 502. The receptacle-side connector 540 is mounted on a substrate 503. The electric wires 550 electrically connect the receptacle-side connector 540 and the IC driver 560. The IC  driver 560 is a circuit that processes signals transmitted through the optical fiber 502.
For the above-described connector 500, there are demands to increase the mating force between a plug and a receptacle and to achieve thickness reduction.

Citation List

Patent Document

Patent Document 1: Japanese Unexamined Patent Application Publication No. 2006-30868

Summary of Invention

Technical Problem

Accordingly, an object of the present invention is to provide a receptacle and a connector that achieve a strong mating force with a plug and that enable thickness reduction. Solution to Problem
An embodiment of the present invention provides a receptacle to which a plug provided at one end of an optical fiber and having a rectangular shape when viewed from above is to be attached. The receptacle includes a main body having a rectangular opening in which the plug is attached from above and which is surrounded by a first side, a second side, a third side, and a fourth side when viewed from above, a first holding member, a second holding member, a third holding member, and a fourth holding member provided at opposite ends of the third side and the fourth side parallel to each other so as to fix the plug, and a first spring terminal to be electrically connected to the plug and being U-shaped to have a turn-back portion when viewed from above. A distal end of the turn-back portion is provided at a position shifted outward from the opening more than the third side. One end of the first spring terminal is located in the opening when viewed from above, and the other end of the first spring terminal is located at a position shifted outward from the opening more than the first side when viewed from above. A portion of the first spring terminal opposed to the first holding member closest to the first spring terminal is bent in a direction away from the first holding member when viewed from above.
A connector according to an embodiment of the present invention includes the above-described receptacle, and a plug to be attached to the receptacle from above. Advantageous Effects of Invention
The present invention provides a receptacle that achieves a strong mating force with a plug and that enables thickness reduction.

Brief Description of Drawings

[Fig. 1] Fig. 1 is an external perspective view of a connector according to an embodiment of the present invention.
[Fig. 2] Fig. 2 is an external perspective view of a plug isolated from the connector.
[Fig. 3] Fig. 3 is an exploded perspective view of the plug.
[Fig. 4] Fig. 4 illustrates a manner in which a main body and an electric circuit unit are mounted on a circuit board.
[Fig. 5] Fig. 5 is an exploded perspective view of a receptacle.

[Fig. 6] Fig. 6 is a back view of the receptacle.

[Fig. 7] Fig. 7 is a schematic structural view of a transmission and receiving system using the connector.

[Fig. 8] Fig. 8(a) is used to explain the mating force when the plug and the receptacle are mated at four corners of the plug. Fig. 8(b) is used to explain the mating force when the plug and the receptacle are mated at positions other the four corners of the plug.

[Fig. 9] Fig. 9 illustrates a distal end portion of a tool used to insert and remove the plug into and from the receptacle.

[Fig. 10] Fig. 10 is a perspective view of the distal end portion of the tool used to insert and remove the plug into and from the receptacle.

[Fig. 11] Fig. 11 is a schematic structural view of a transmission and receiving system using a connector according to another embodiment.

[Fig. 12] Fig. 12 is an external perspective view of a connector described in Patent Document 1.

Description of Embodiments

A receptacle and a connector according to an embodiment of the present invention will be described below with reference to the drawings.

[Schematic Structure of Connector]

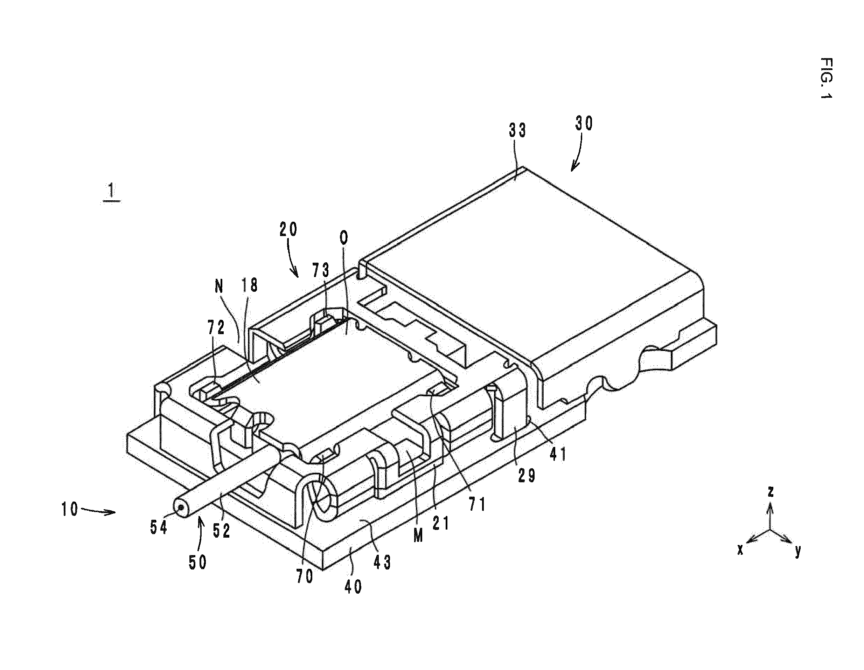

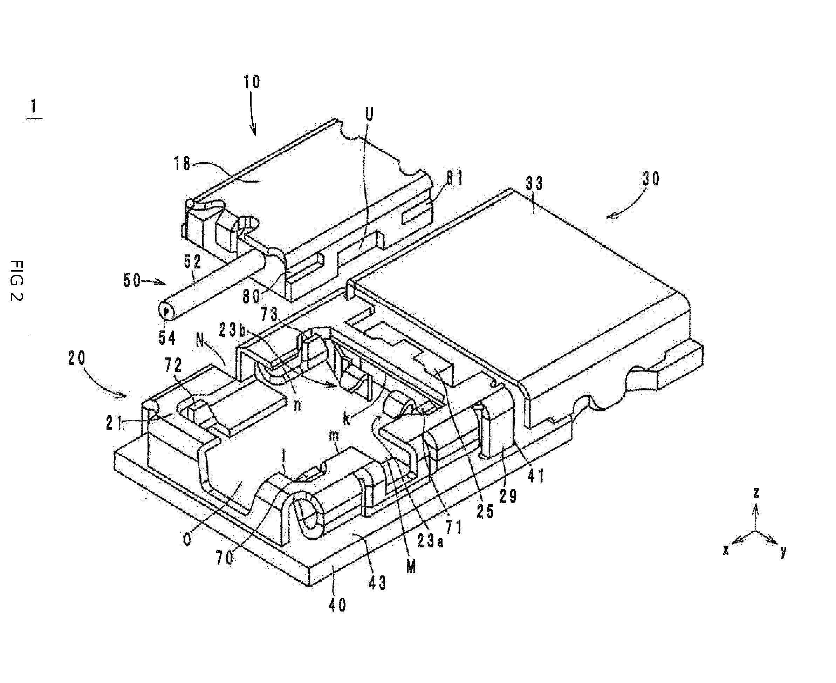

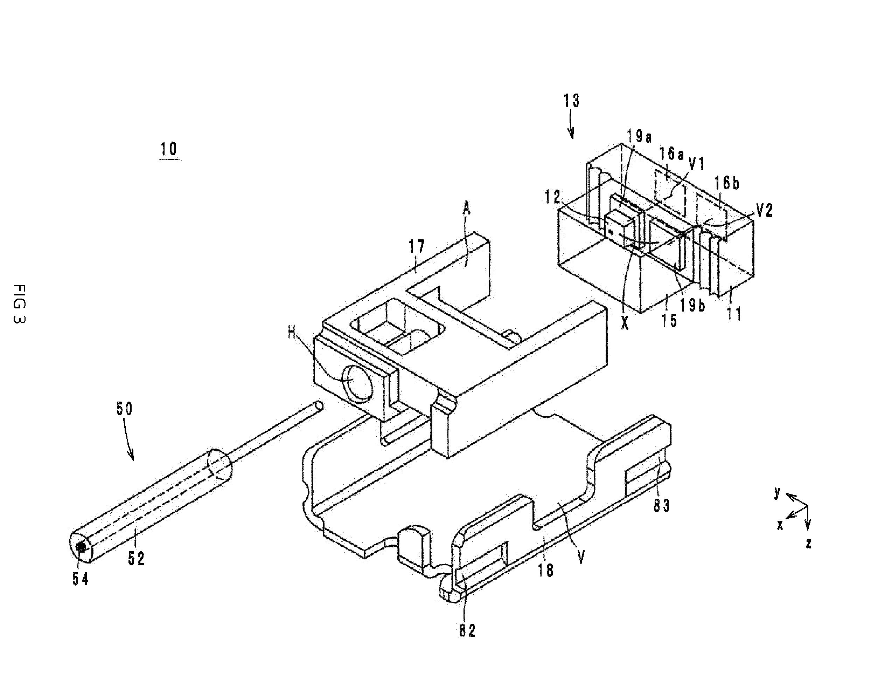

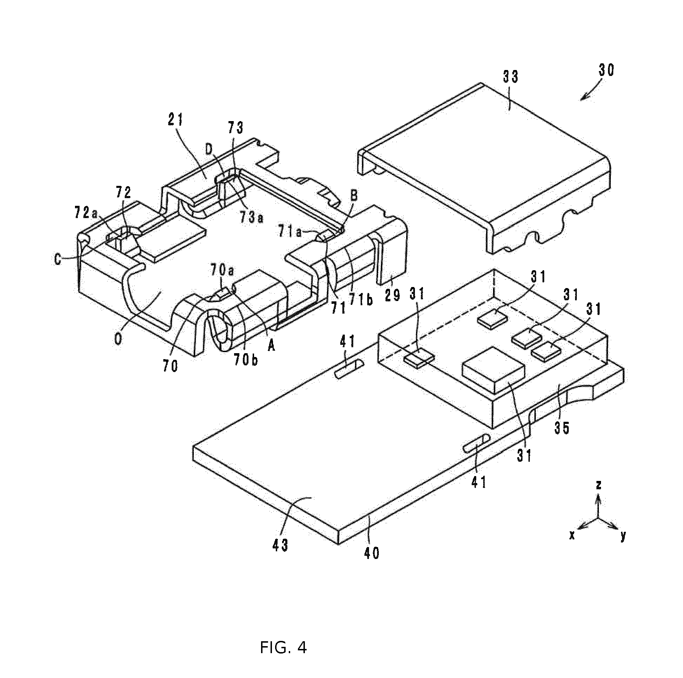

First, a schematic structure of a connector including a receptacle according to an embodiment of the present invention will be described. Fig. 1 is an external perspective view of a connector 1 according to the embodiment of the present invention. Fig. 2 is an external perspective view of a plug 10 isolated from the connector 1. Fig. 3 is an exploded perspective view of the plug 10. Fig. 4 illustrates a manner in which a main body 21 and an electric circuit unit 30 are mounted on a circuit board 40.

As illustrated in Figs. 1 and 2, the connector 1 includes a plug 10, a receptacle 20, an electric circuit unit 30, and a circuit board 40. The plug 10 is provided at one end of an optical fiber 50, and converts an optical signal into an electric signal or converts an electric signal into an optical signal. Hereinafter, a direction in which the optical fiber 50 extends is defined as an x-axis direction, an up-down direction is defined as a z-axis direction, and a direction orthogonal to the x-axis direction and the z-axis direction is defined as a y-axis direction. The x-axis direction, the y-axis direction, and the z-axis direction are orthogonal to one another.

The circuit board 40 includes electric circuits on a surface and in an inner portion thereof, and has a mount surface 43 parallel to an x-y plane, as illustrated in Figs. 1 and 2. The mount surface 43 of the circuit board 40 has holes 41. The holes 41 are provided near a +y-axis direction side and near a -y-axis direction side of the mount surface 43 such as to be opposed to each other. On the circuit board 40, the receptacle 20 and the electric circuit unit 30 are mounted to be arranged in this order from the +x-axis direction toward the -x-axis direction side.

The optical fiber 50 includes a jacket 52 and a core wire 54. The core wire 54 includes a core and a cladding formed of glass or resin. The jacket 52 is formed of any of UV curable resin, fluororesin, and silicone resin, and covers the core wire 54. In a -x-axis direction end portion of the optical fiber 50, the jacket 52 is removed and the core wire 54 is exposed, as illustrated in Fig. 3.

The plug 10 is rectangular when viewed from the +z-axis direction side (upper side), and includes a photoelectric conversion element 12, a mount portion 13, a ferrule 17, and a metallic member 18. The photoelectric conversion element 12 is a semiconductor element such as a photodiode or a VCSEL.

The mount portion 13 includes a substrate 11, a sealing resin 15, external terminals 16a and 16b, terminal portions 19a and 19b, and vias V1 and V2.

The substrate 11 is a resin substrate shaped like a rectangular parallelepiped. As will be described below, the photoelectric conversion element 12 is mounted on a +x-axis direction side surface of the substrate 11.

The external terminals 16a and 16b are provided on a- x-axis direction side surface of the substrate 11 to be arranged in this order from the +y-axis direction side toward the -y-axis direction side. The terminal portions 19a and 19b are provided on the +x-axis direction side surface of the substrate 11 to be arranged in this order from the +y-axis direction side toward the -y-axis direction side. Here, the external terminal 16a and the terminal portion 19a are opposed and connected by the via V1. The external terminal 16b and the terminal portion 19b are opposed and connected by the via V2. On the terminal portion 19a, the photoelectric conversion element 12 is mounted. Further, the terminal portion 19b and the photoelectric conversion element 12 are electrically connected by wire bonding using a wire X.

The sealing resin 15 is formed of transparent resin, and seals the photoelectric conversion element 12 mounted on the substrate 11. The photoelectric conversion element 12 is thereby buried in the mount portion 13.

The ferrule 17 is a resin member shaped like a rectangular parallelepiped. The ferrule 17 fixes the optical fiber 50 and the mount portion 13 in a state in which the core wire 54 and the photoelectric conversion element 12 are opposed to each other. The ferrule 17 has a depressed portion A and a hole H. The depressed portion A is formed by recessing a -x-axis direction side surface of the ferrule 17. Thus, the sealing resin 15 is fitted in the depressed portion A, and the mount portion 13 is fixed to the ferrule 17. The hole H is a columnar cavity, which extends through the ferrule 17 from a +x-axis direction side surface toward the -x-axis direction side and reaches the depressed portion A. For this reason, when the core wire 54 is inserted in the hole H from the +x-axis direction side, the photoelectric conversion element 12 and the optical fiber 50 are opposed and connected optically.

The metallic member 18 covers the photoelectric conversion element 12 from the +z-axis direction side. The metallic member 18 covers +z-axis direction side surfaces, +y-axis direction side surfaces, and -y-axis direction side surfaces of the mount portion 13 and the ferrule 17. Further, as illustrated in Figs. 2 and 3, the metallic member 18 has depressed portions 80, 81, 82, and 83. As illustrated in Fig. 2, the depressed portion 80 and the depressed portion 81 are formed by recessing a +y-axis direction side surface of the metallic member 18. The depressed portion 80 is provided closer to the +x-axis direction side than the depressed portion 81. As illustrated in Fig. 3, the depressed portion 82 and the depressed portion 83 are formed by recessing a -y-axis direction side surface of the metallic member 18. The depressed portion 82 is provided closer to the +x-axis direction side than the depressed portion 83.

As illustrated in Fig. 4, the electric circuit unit 30 is mounted on the mount surface 43 of the circuit board 40 on the -x-axis direction side of the main body 21 of the receptacle 20, and processes signals transmitted by the plug 10. The electric circuit unit 30 includes circuit elements 31, a metal cap 33, and a resin portion 35. The circuit elements 31 are electronic chip components mounted on the mount surface 43 of the circuit board 40, and drive the photoelectric conversion element 12. As illustrated in Fig. 4, the circuit elements 31 are sealed with the resin portion 35. The metal cap 33 covers the circuit elements 31 sealed with the resin portion 35. The metal cap 33 covers the resin portion 35 from the +z-axis direction side, the +y-axis direction side, and the -y-axis direction side. Next, a structure of the receptacle 20 will be described.

[Structure of Receptacle]

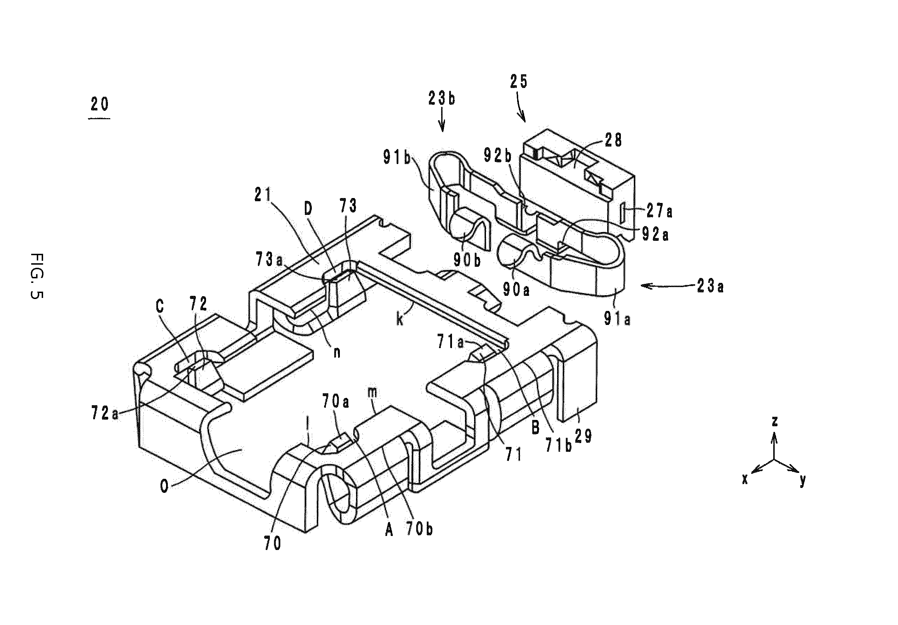

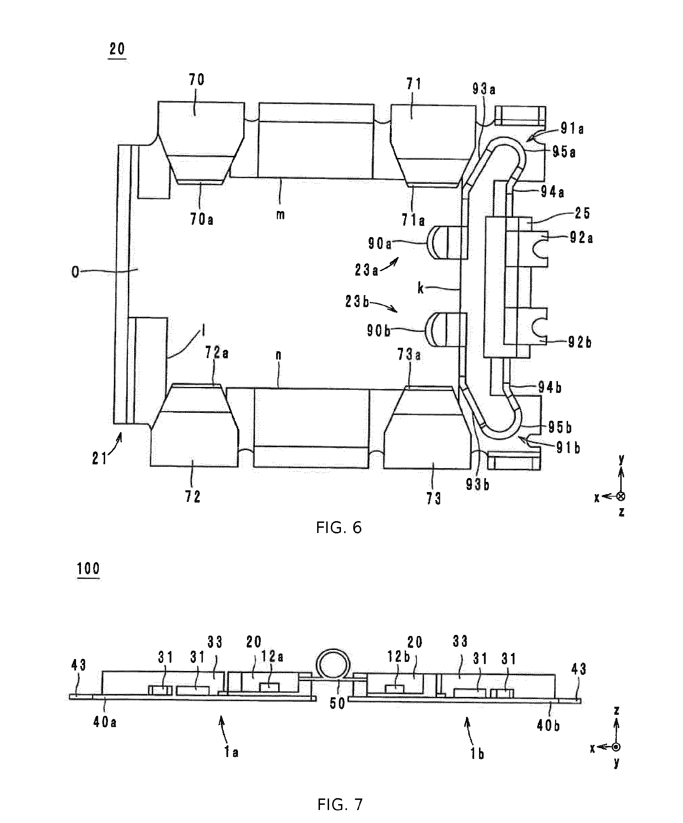

Fig. 5 is an exploded perspective view of the receptacle 20. Fig. 6 is a back view of the receptacle 20. As illustrated in Fig. 5, the receptacle 20 includes a main body 21, spring terminals 23a and 23b, an insulating portion 25, fixing members 29, and holding members 70 to 73, and is mounted on the circuit board 40. To the receptacle 20, the plug 10 is attached from the +z-axis direction side (upper side). The main body 21, the fixing members 29, and the holding members 70 to 73 are formed by bending one metal plate.

The main body 21 is a housing to which the plug 10 is attached. Te main body 21 has an opening O which is rectangular when viewed from the +z-axis direction side and in which the plug 10 is attached from the +z-axis direction side (upper side). The main body 21 has a shape surrounding the plug 10 (that is, an open-square shape). More specifically, the opening O is surrounded by sides k, 1, m, and n. Of the sides at the opening O extending in the y-axis direction, a -x-axis direction side is the side k, and a +x-axis direction side is the side l. Further, of the sides extending in the x-axis direction, a +y-axis direction side is the side m, and a -y-axis direction side is the side n. The side k and the side l are parallel to each other, and the side m and the side n are parallel to each other.

The main body 21 is formed by bending one open-square metal plate. More specifically, the main body 21 is formed by bending a +x-axis direction side, a center portion of a +y-axis direction side, and a center portion of a -y-axis direction side of the metal plate in the -z-axis direction.

As illustrated in Fig. 5, cutouts A and B are provided at opposite ends of the side m of the main body 21 such as to extend from the opening O in the +y-axis direction (outward direction). The cutout A is located closer to the +x-axis direction side than the cutout B. The cutouts A and B are each shaped like a trapezoid whose width in the x-axis direction (extending direction of the side m) decreases with increasing distance from (away from) the side m in the +y-axis direction. Cutouts C and D are provided at opposite ends of the side n of the main body 21 such as to extend from the opening O in the -y-axis direction (outward direction). The cutout C is located closer to the +x-axis direction side than the cutout D. The cutouts C and D are each shaped like a trapezoid whose width in the x-axis direction (extending direction of the side n) decreases with increasing distance from (away from) the side n in the -y-axis direction.

As illustrated in Fig. 5, the fixing members 29 are connected to a -x-axis direction end portion of the main body 21 at a +y-axis direction side and a -y-axis direction side. The fixing members 29 extend in the z-axis direction, and are press-fitted in the holes 41 of the circuit board 40, as illustrated in Figs. 1 and 2. The receptacle 20 is thereby mounted on the circuit board 40. At this time, the fixing members 29 are connected to a ground conductor in the fixing board 40. The main body 21 is thereby kept at a ground potential.

The holding members 70 and 71 are spring members provided at opposite ends of the side m to fix the plug 10. The holding member 70 is located closer to the +x-axis direction side than the holding member 71. Here, -y-axis direction end portions of the holding members 70 and 71 are designated as end portions 70a and 71a, and +y-axis direction end portions thereof are designated as end portions 70b and 71b. The end portions 70a and 71a (the other ends) are located in the opening O when viewed from the +z-axis direction side. Also, the end portion 70a is located in the cutout A, and the end portion 71a is located in the cutout B. The end portions 70b and 71b (one ends) are connected to the main body 21. Thus, the holding members 70 and 71 are U-shaped when viewed in the x-axis direction (extending direction of the side m). The width of the end portions 70a and 71a in the x-axis direction (extending direction of the side m) is less than the width of the end portions 70b and 71b in the x-axis direction (extending direction of the side m). That is, the holding members 70 and 71 are each shaped like a trapezoid whose width decreases toward a distal end.

The holding members 72 and 73 are spring members provided at opposite ends of the side n to fix the plug 10. The holding member 72 is located closer to the +x-axis direction side than the holding member 73. Here, +y-axis direction end portions of the holding members 72 and 73 are designated as end portions 72a and 73a, and -y-axis direction end portions thereof are designated as end portions 72b and 73b (not illustrated). The end portions 72a and 73a (the other ends) are located in the opening O, when viewed from the +z-axis direction side. Also, the end portion 72a is located in the cutout C, and the end portion 73a is located in the cutout D. The end portions 72b and 73b (one ends) are connected to the main body 21. Thus, the holding members 72 and 73 are U-shaped when viewed in the x-axis direction (extending direction of the side n). The width of the end portions 72a and 73a in the x-axis direction (extending direction of the side n) is less than the width of the end portions 72b and 73b in the x-axis direction (extending direction of the side n). That is, the holding members 72 and 73 are each shaped like a trapezoid whose width decreases toward a distal end.

The spring terminals 23a and 23b are terminals for signals to be electrically connected to the plug 10. The spring terminals 23a and 23b will be described in more detail below.

As illustrated in Figs. 5 and 6, the spring terminal 23a includes a contact portion 90a, a spring portion 91a, and a fixed portion 92a. The spring portion 91a is a leaf spring that connects the contact portion 90a and the fixed portion 92a and that is U-shaped to have a turn-back portion when viewed from the +z-axis direction side (upper side). More specifically, the spring portion 91a is located closer to the -x-axis direction side than the holding member 71, and includes spring members 93a and 94a and a turn-back portion 95a, as illustrated in Fig. 6. The spring members 93a and 94a are formed by leaf springs bent in the same direction. More specifically, the spring members 93a and 94a are made dogleg by being bent in the -x-axis direction near midpoints in the y-axis direction, and are bent in the -x-axis direction as they extend in the +y-axis direction when viewed from the +z-axis direction side. The spring member 93a is located closer to the +x-axis direction side than the spring member 94a, whereby the spring member 93a (a portion of the spring terminal 23a opposed to the holding member 71) is opposed to the holding member 71 (the holding member closest to the spring terminal 23a) on the -x-axis direction side of the holding member 71, and is bent in a direction away from the holding member 71 when viewed from the +z-axis direction side (upper side). The turn-back portion 95a is arc-shaped, and connects the spring member 93a and the spring member 94a. More specifically, the turn-back portion 95a connects +y-axis direction end portions of the spring members 93a and 94a.

As illustrated in Figs. 5 and 6, the spring terminal 23b includes a contact portion 90b, a spring portion 91b, and a fixed portion 92b. The spring portion 91b is a leaf spring that connects the contact portion 90b and the fixed portion 92b and that is U-shaped to have a turn-back portion when viewed from the +z-axis direction side. More specifically, the spring portion 91b is located closer to the -x-axis direction side than the holding member 73, and includes spring members 93b and 94b and a turn-back portion 95b, as illustrated in Fig. 6. The spring members 93b and 94b are formed by leaf springs bent in the same direction. More specifically, the spring members 93b and 94b are made dogleg by being bent in the -x-axis direction near midpoints in the y-axis direction, and are bent in the -x-axis direction as they extend in the -y-axis direction when viewed from the +z-axis direction side. The spring member 93b is located closer to the +x-axis direction side than the spring member 94b, whereby the spring member 93b is opposed to the holding member 73 on the -x-axis direction side of the holding member 73, and is bent in a direction away from the holding member 73. The turn-back portion 95b is arc-shaped, and connects the spring member 93b and the spring member 94b. More specifically, the turn-back portion 95b connects -y-axis direction end portions of the spring members 93b and 94b.

The contact portions 90a and 90b are end portions (one ends) located on the +x-axis direction side, of the end portions of the spring terminals 23a and 23b. The contact portion 90a is connected to an end portion of the spring member 93a on the -y-axis direction side and on the +z-axis direction side (a side where the turn-back portion 95a is not connected). The contact portion 90b is connected to an end portion of the spring member 93b on the +y-axis direction side and on the +z-axis direction side (a side where the turn-back portion 95b is not connected). As illustrated in Fig. 6, the contact portions 90a and 90b are located in the opening O when viewed from the +z-axis direction side (upper side). The contact portions 90a and 90b are bent in an inverted U-shape when viewed from the +y-axis direction side (in the extending direction of the side k), and are led out toward the +x-axis direction sides of the spring portions 91a and 91b, respectively. The contact portions 90a and 90b are in contact with a -x-axis direction side surface of the plug 10. More specifically, the contact portions 90a and 90b are in contact with the external terminals 16a and 16b of the plug 10, respectively. Here, the contact portions 90a and 90b are inclined to form an angle of about 45° with the +x-axis direction end portions of the spring portions 91a and 91b, respectively.

The fixed portions 92a and 92b are end portions (the other end) located on the -x-axis direction side, of the end portions of the spring terminals 23a and 23b, and extend in the -x-axis direction. The fixed portions 92a and 92b are located at positions shifted outward from the opening O more than the side k. The fixed portion 92a is connected to an end portion of the spring member 94a on the -y-axis direction side and on the -z-axis direction side (a side where the turn-back portion 95a is not connected). The fixed portion 92b is connected to an end portion of the spring member 94b on the +y-axis direction side and on the -z-axis direction side. The fixed portions 92a and 92b are connected to lands (not illustrated) on the circuit board 40 to function as external terminals when the receptacle 20 is mounted.

The spring terminals 23a and 23b having the above-described structures are U-shaped to have the turn-back portions 95a and 95b, when viewed from the +z-axis direction side. The U-shaped turn-back portion 95a of the spring terminal 23a points in the +y-axis direction, and a distal end of the turn-back portion 95a is located closer to the +y-axis direction side (a side shifted outward from the opening O) than the side m. The U-shaped turn-back portion 95b of the spring terminal 23b points in the -y-axis direction, and a distal end of the turn-back portion 95b is located closer to the -y-axis direction side than the side n. Thus, the spring terminal 23a and the sprint terminal 23b are line-symmetrical about the x-axis (extending direction of the optical fiber 50). Further, the contact portions 90a and 90b are in contact with the external terminals 16a and 16b, respectively, and the fixed portions 92a and 92b are connected to the lands of the circuit board 40, whereby the spring terminals 23a and 23b function as terminals for relaying signal transmission between the plug 10 and the circuit board 40.

The insulating portion 25 is shaped like a rectangular parallelepiped and is formed of resin. The insulating portion 25 is formed integrally with the spring terminals 23a and 23b. Thus, the spring terminals 23a and 23b are fixed to the main body 21 so as not to be electrically connected to the main body 21. More specifically, the spring portion 91a and the spring portion 91b are led out from a +y-axis direction side surface and a -y-axis direction side surface of the insulating portion 25, respectively, and the fixed portions 92a and 92b are led out from a rear surface of the insulating portion 25. The insulating portion 25 is fixed to the main body 21 on an upper surface 28 thereof.

The plug 10 is fitted in the receptacle 20 having the above-described structure from the +z-axis direction side. At this time, as illustrated in Figs. 1 and 2, the holding members 70 to 73 are engaged with the depressed portions 80 to 83, respectively. Further, the spring terminals 23a and 23b are electrically connected to the external terminals 16a and 16b, respectively. The plug 10 is pressed in the +x-axis direction by the spring terminals 23a and 23b. By these structures, the plug 10 is fixed to the receptacle 20.

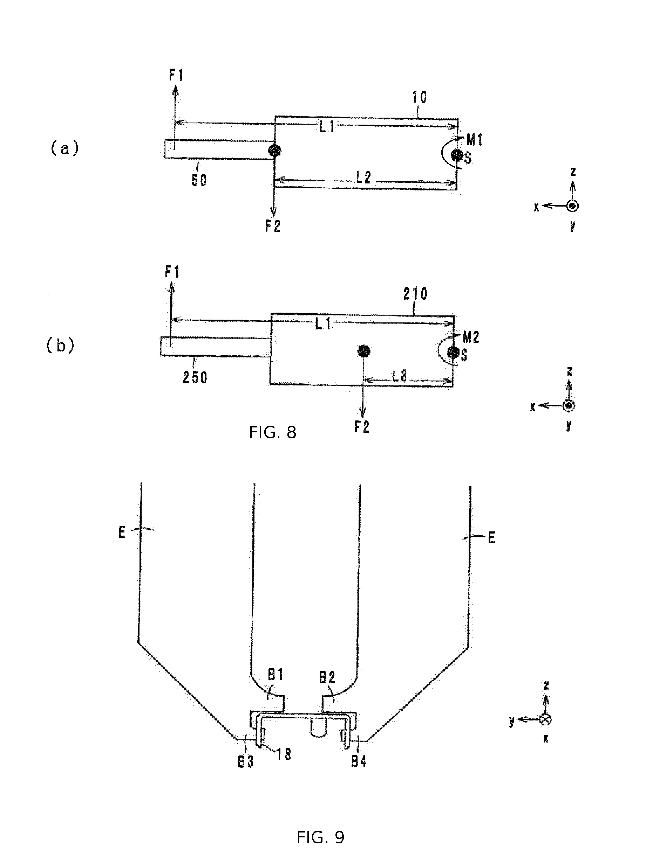

Fig. 7 is a schematic structural view of a transmission and receiving system 100 using the connector 1. As illustrated in Fig. 7, a receiving connector 1a and a transmission connector 1b are provided at opposite ends of an optical fiber 50. The receiving connector 1a includes a receiving circuit board 40a and a photodiode 12a. The transmission connector 1b includes a transmission circuit board 40b and a VCSEL 12b. Thus, signals are transmitted from the transmission connector 1b to the receiving connector 1a through the optical fiber 50.

[Advantages]

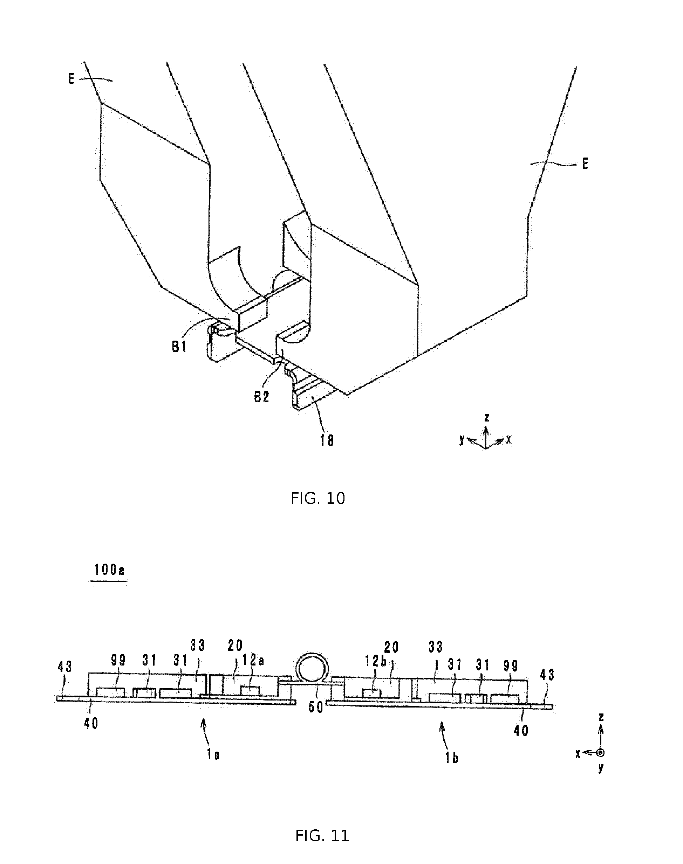

According to the receptacle 20, since the plug 10 is fixed to the receptacle 20 by the holding members 70 to 73, the mating force between the plug 10 and the receptacle 20 can be increased. This will be described below with reference to the drawings. Fig. 8(a) is used to explain the mating force when the plug 10 and the receptacle 20 are mated at four corners of the plug 10. Fig. 8(b) is used to explain the mating force when a plug 210 and a receptacle 220 are mated at positions other than four corners of the plug 210.

The plug 10 and the receptacle 20 are mated at four corners of the plug 10, as illustrated in Fig. 8(a), and the plug 210 and the receptacle 220 are mated at two positions in a -x-axis direction end portion of the plug 210 and two positions other than a +x-axis direction end portion of the plug 210, as illustrated in Fig. 8(b). In these cases, a comparison is made between likelihoods of disengagement of the plugs 10 and 250 when the optical fibers 50 and 250 are pulled in the +z-axis direction. A fulcrum when the optical fiber 50 is pulled in the +z-axis direction is a fulcrum S in the -x-axis direction end portion of the plug 10 or 210. Here, F1 represents a force for pulling the optical fiber 50 or 250 in the +z-axis direction, and F2 represents a force applied to the plug 10 or 210 by mating. L1 represents a length from a point where the force is applied to the optical fiber 50 or 250 to the fulcrum S, and L2 represents a length from the points in the +x-axis direction end portion of the receptacle 20 where the plug 10 and the receptacle 20 are mated, to the fulcrum S. L3 represents a length from the points, other than the -x-axis direction end portion of the receptacle 220, where the plug 210 and the receptacle 220 are mated, to the fulcrum S. M1 represents a moment that acts clockwise about the fulcrum S, and M2 represents a moment that acts clockwise about the fulcrum S.

When the optical fiber 50 is pulled in the +z-axis direction by the force F1, as illustrated in Fig. 8(a), a moment that acts clockwise about the fulcrum S is F1L1. At this time, a moment that acts counterclockwise about the fulcrum S when the plug 10 and the receptacle 20 are mated is F2L2. Hence, the moment that acts clockwise about the fulcrum S is given by Equation (1):

$$M1 = F1L1 - F2L2 \qquad (1).$$

When the optical fiber 250 is pulled in the +z-axis direction by the force F1, as illustrated in Fig. 8(b), a moment that acts clockwise about the fulcrum S is F1L1, which is equal to that in the case of Fig. 8(a). At this time, a moment that acts counterclockwise about the fulcrum S when the plug 210 and the receptacle 220 are mated is F2L3. Hence, the moment that acts clockwise about the fulcrum S is given by Equation (2):

$$M2 = F1L1-F2L3 \qquad (2).$$

Here, since the relation L2 > L3 is established from Figs. 8(a) and 8(b), when Equation (1) and Equation (2) are compared, M1<M2. For this reason, the moment at which the plug disengages from the receptacle is smaller when the plug 10 and the receptacle 20 are mated at four corners, as illustrated in Fig. 8(a). That is, the plug 10 is less likely to disengage from the receptacle than the plug 210, and the mating force between the plug 10 and the receptacle 20 is strong.

Further, according to the receptacle 20, even when the plug 10 and the receptacle 20 are mated at four corners of the plug 10 to increase the mating force therebetween, the thickness of the connector 1 can be reduced. More specifically, as illustrated in Figs. 5 and 6, the holding members 70 to 73 are located at four corners of the opening O of the receptacle 20. For this reason, when the spring terminals 23a and 23b are U-shaped to extend in the y-axis direction, when viewed in the z-axis direction, the holding members 71 and 73 are in contact with the spring terminals 23a and 23b. To avoid this, it is conceivable to form the spring terminals 23a and 23b in an inverted U-shape, when viewed in the y-axis direction. In this case, however, the extending length of the receptacle 20 in the z-axis direction increases, and the thickness of the receptacle 20 cannot be reduced.

Accordingly, the spring terminals 23a and 23b have a structure described below. More specifically, the spring members 93a and 93b are made dogleg by being bent in the -x-axis direction near the midpoints in the y-axis direction. That is, the spring member 93a bends in the -x-axis direction as it extends in the +y-axis direction, when viewed from the +z-axis direction side. Similarly, the spring member 93b bends in the -x-axis direction as it extends in the -y-axis direction, when viewed from the +z-axis direction side. Thus, the spring members 93a and 93b of the spring terminals 23a and 23b opposed to the holding members 71 and 73 closest to the spring terminals 23a and 23b bend in a direction away from the holding members 71 and 73, respectively. As a result, the spring members 93a and 93b are restricted from touching the holding members 71 and 73, and this allows thickness reduction of the receptacle 20.

Further, the distal end of the U-shaped turn-back portion of the spring terminal 23a or 23b is located closer to the +y-axis direction side or the -y-axis direction side than the side m or the side n. For this reason, the spring portions 91a and 91b can have a sufficient length, and the spring terminals 23a and 23b are unlikely to plastically deform even when they are greatly displaced. That is, high springiness can be obtained in the spring terminals 23a and 23b.

As illustrated in Fig. 5, since the main body 21 has the cutouts A to D, the end portions 70a, 71a, 72a, and 73a of the holding members 70 to 73 are out of contact with the main body 21 in a normal state.

As illustrated in Figs. 5 and 6, the cutouts A to D are each shaped like a trapezoid whose width in the x-axis direction decreases with increasing distance from the side m or n, when viewed from the +z-axis direction side. This makes the area of the main body 21 of the receptacle 20 larger than in the case in which the cutouts A to D are rectangular. Hence, the strength of the main body 21 increases.

The width in the x-axis direction of the end portions 70a, 71a, 72a, and 73a of the holding members 70 to 73 is less than the width in the x-axis direction of the end portions 70b, 71b, 72b, and 73b. Thus, even when the area of the cutouts A to D is small, the holding members 70 to 73 can be fitted in the cutouts A to D, respectively.

The holding members 70 to 73 are shaped like hooks that start from the end portions 70b, 71b, 72b, and 73b connected to the main body 21. For this reason, the length of portions of the holding members 70 to 73 functioning as springs is large. Hence, even when the holding members 70 to 73 are greatly displaced, they are unlikely to plastically deform. That is, high springiness can be obtained.

Further, as illustrated in Fig. 5, if the end portions 70a to 73a of the holding members 70 to 73 are greatly displaced, they touch the main body 21. For this reason, the holding members 70 to 73 are not displaced enough to plastically deform.

The plug 10 can be fixed to the main body 21 by being pushed in the +x-axis direction by the contact portions 90a and 90b.

The distal ends of the contact portions 90a and 90b are inclined to form an angle of about 45° with the spring members 93a and 93b, respectively. For this reason, the contact portions 90a and 90b can mechanically lead the plug 10.

The contact portions 90a and 90b are displaced in the x-axis direction when the spring members 93a and 93b bend. Here, as illustrated in Fig. 5, the insulating portion 25 is provided on the -x-axis direction side of the contact portions 90a and 90b. For this reason, if the contact portions 90a and 90b are greatly displaced, they are brought into contact with the insulating portion 25. Hence, the contact portions 90a and 90b are not displaced enough to plastically deform.

As illustrated in Figs. 1 and 2, the fixing members 29 of the receptacle 20 are press-fitted in the holes 41. For this reason, even when a stress in the +z-axis direction is applied to the receptacle 20 by pulling up the plug 10 in the +z-axis direction to be inserted into and removed from the receptacle 20, the receptacle 20 does not come off the circuit board 40 because it is reliably mounted on the circuit board 40.

Since the main body 21 surrounds the plug 10, as illustrated in Fig. 2, the plug 10 is unlikely to come off the receptacle 20, and the mating force between the plug 10 and the receptacle 20 can be increased.

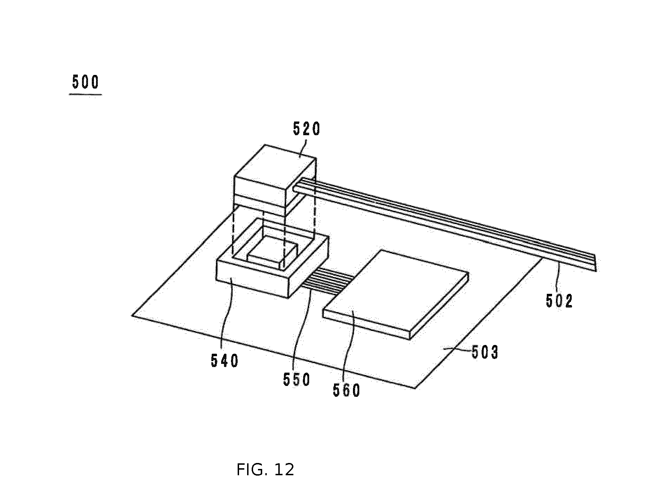

Fig. 9 illustrates a tip portion of a tool E used to insert and remove the plug 10 into and from the receptacle 20. Fig. 10 is a perspective view of the tip portion of the tool E used to insert and remove the plug 10 into and from the receptacle 20. In Figs. 9 and 10, only the metallic member 18 of the plug 10 is illustrated for easy understanding. In the connector 1, since the plug 10 is inserted into and removed from the receptacle 20 with the tool E, there is no need to touch the optical fiber 50 or the like with the hand during insertion and removal. Since the stress on the optical fiber 50 can be thereby reduced, trouble, such as a break in a wire, can be prevented without any burden on the optical fiber 50. More specifically, as illustrated in Figs. 9 and 10, the plug 10 is inserted in and removed from the receptacle 20 by fitting L-shaped projections B3 and B4 of the tool E into depressed portions U and V of the metallic member 18 (see Figs. 2 and 3) from cutouts M and N and holding down the metallic member 18 from the +z-axis direction side by projections B1 and B2. When being inserted into the receptacle 20, the plug 10 is clamped by the tool E and is fitted in from the +z-axis direction side of the main body 21.

Further, since mating between the plug 10 and the receptacle 20 can be checked through the cutouts M and N, as illustrated in Figs. 1 and 2, mating efficiency is enhanced.

In addition, since the metal cap 33, the metallic member 18, and the main body 21 are connected to the ground, they have the same potential. Thus, the connector 1 is entirely shielded from external noise, and the connector 1 can exert a shield effect. By the shield effect, the resistances of the circuit elements 31 to ESD and EMC can be increased. Also, the resistance of an external electric interface to EMC can be increased.

The metallic member 18 and the main body 21 are formed of metal, and are connected to a ground conductor (not illustrated) of the circuit board 40. For this reason, a large current of static electricity is guided to the ground via the metallic member 18, the main body 21, and the ground conductor of the circuit board 40.

As illustrated in Figs. 1 and 2, the plug 10 is in contact with the receptacle 20 with the metallic holding members 70 to 73 being disposed therebetween. For this reason, abrasion is unlikely to occur between the plug 10 and the holding members 70 to 73, and contact unevenness due to variations in shape of the plug 10 and the holding members 70 to 73 can be prevented.

Since the plug 10 and the receptacle 20 are fixed by mating of the metallic member 18 and the main body 21, a strong tactile feeling is caused at the time of mating, and completion of mating can be realized from sound and feel.


[Another Embodiment]

The receptacle 20 and the connector 1 having the above-described structures are not limited to those adopted in the above embodiment. Therefore, the receptacle 20 and the connector 1 can be changed within the scope of the gist. Fig. 11 is a schematic structural view of a transmission and receiving system 100a using a connector 1 according to another embodiment.

As illustrated in Fig. 11, a receiving connector 1a and a transmission connector 1b may include SERDES devices 99. The SERDES device 99 is mounted on a circuit board 40. The SERDES devices 99 convert serial signals into parallel signals and convert parallel signals into serial signals. Since the distance between a driver circuit and a SERDES circuit is thereby decreased, optical transmission characteristics are improved.

In the connector 1, the metal cap 33 and the main body 21 may be provided integrally. This can increase the resistances of the entire connector 1 to ESD and EMC. Further, since the number of components is decreased, cost reduction can be achieved. Also, since the number of manufacturing steps is decreased, the manufacturing time is shortened.

While the four holding members are provided in the receptacle 20, five or more holding members may be provided. In this case, since the plug 10 and the receptacle 20 are mated at a plurality of positions, the mating force can be increased further. Further, it is necessary to form a plurality of cutouts in the main body 21 in order to avoid contact of the holding members with the main body 21.

While the two spring terminals are provided in the receptacle 20, only one spring terminal may be provided. This is because, even when only one spring terminal is provided, it can be connected to the external terminals 16a and 16b and the lands of the circuit board 40 (not illustrated) as long as it has contact portions and fixed portions at opposite ends.

The circuit elements 31 may be provided in the plug 10. This eliminates the necessity to form a circuit portion in the circuit board 40. Further, the transmission characteristics are improved and stabilized.

A plurality of optical fibers 50 and a plurality of photoelectric conversion elements 12 may be mounted in the plug 10. This can increase the transmission capacity. Further, the optical fibers 50 and the photoelectric conversion elements 12 may be arranged in arrays.

The optical fiber 50 is not limited to a quartz fiber, and may be an organic optical waveguide or a POF (Plastic Optical Fiber). These optical waveguides can be selected depending on the intended use.

Industrial Applicability

The present invention is useful for a receptacle and a connector, and particularly, is superior in ability to provide high mating force with a plug and to achieve thickness reduction.

Reference Signs List

| | |
|---|---|
| 1 | connector |
| 10 | plug |
| 12 | photoelectric conversion element |
| 13 | mount portion |
| 15 | sealing resin |
| 16a, 16b | external terminal |
| 17 | ferrule |
| 18 | metallic member |
| 19a, 19b | terminal portion |
| 20 | receptacle |
| 21 | main body |
| 23a, 23b | spring terminal |
| 25 | insulating portion |
| 29 | fixing member |
| 30 | electric circuit unit |
| 31 | circuit element |
| 33 | metal cap |
| 40 | circuit board |
| 41 | hole |
| 43 | mount surface |
| 50 | optical fiber |
| 52 | jacket |
| 54 | core wire |
| 70 to 73 | holding member |
| 80 to 83 | depressed portion |
| 100 | transmission and receiving system |

**Claims**

1. A receptacle to which a plug provided at one end of an optical fiber and having a rectangular shape when viewed from above is to be attached, the receptacle comprising:

   a main body having a rectangular opening in which the plug is attached from above, the rectangular opening being surrounded by a first side, a second side, a third side, and a fourth side when viewed from above;
   a first holding member, a second holding member, a third holding member, and a fourth holding member provided at opposite ends of the third side and the fourth side parallel to each other so as to fix the plug; and
   a first spring terminal electrically connected to the plug and being U-shaped to have a turn-back portion when viewed from above,
   wherein a distal end of the turn-back portion is located at a position shifted outward from the opening more than the third side,
   wherein one end of the first spring terminal is located in the opening when viewed from above,
   wherein the other end of the first spring terminal is located at a position shifted outward from the opening more than the first side when viewed from above, and

wherein a portion of the first spring terminal opposed to the first holding member closest to the first spring terminal is bent in a direction away from the first holding member when viewed from above.

2. The receptacle according to Claim 1,
   wherein the first holding member, the second holding member, the third holding member, and the fourth holding member are U-shaped when viewed in an extending direction of the third side or the fourth side,
   wherein one ends of the first holding member, the second holding member, the third holding member, and the fourth holding member are connected to the main body, and
   wherein the other ends of the first holding member, the second holding member, the third holding member, and the fourth holding member are located in the opening.

3. The receptacle according to Claim 1 or 2,
   wherein the third side or the fourth side of the main body has four cutouts that extend outward from the opening, and
   wherein the other ends of the first holding member, the second holding member, the third holding member, and the fourth holding member are located in the cutouts.

4. The receptacle according to Claim 3,
   wherein a width of the cutouts in an extending direction of the third side and the fourth side decreases with increasing distance from the third side and the fourth side.

5. The receptacle according to any of Claims 1 to 4,
   wherein a width of the other ends of the first holding member, the second holding member, the third holding member, and the fourth holding member in an extending direction of the third side or the fourth side is less than a width of one ends of the first holding member, the second holding member, the third holding member, and the fourth holding member in the extending direction of the third side or the fourth side.

6. The receptacle according to any of Claims 1 to 5, further comprising:

   an insulating member that fixes the first spring terminal to the main body.

7. The receptacle according to any of Claims 1 to 6, wherein the first spring terminal includes:

   a first spring member opposed to the first holding member closest to the first spring terminal;
   a second spring member formed by a leaf spring that is bent in the same direction as a bending direction of the first spring member when viewed from above;
   a turn-back portion that connects the first spring member and the second spring member;
   a fixed portion connected to an end portion of the second spring member to which the turn-back portion is not connected, the fixed portion functioning as an external terminal; and
   a contact portion connected to an end portion of the first spring member to which the turn-back portion is not connected, the contact portion being in contact with the plug.

8. The receptacle according to Claim 7,
   wherein the one end of the first spring terminal has an inverted U-shape when viewed in an extending direction of the first side and is in contact with the plug.

9. The receptacle according to any of Claims 1 to 8, further comprising:

   a second spring terminal provided line-symmetrically to the first spring terminal about an extending direction of the optical fiber when viewed from above.

10. A connector comprising:

    the receptacle according to any of Claims 1 to 9; and
    a plug to be attached to the receptacle from above.

11. The connector according to Claim 10,
    wherein the plug has depressed portions with which the first holding member, the second holding member, the third holding member, and the fourth holding member are engaged.

FIG. 1

FIG 2

FIG 3

FIG. 4

FIG. 5

FIG. 6

FIG. 7

(a)

F1

10

L1

M1
S

50

L2

F2

z
x
y

(b)

F1

210

L1

M2
S

250

L3

F2

z
x
y

FIG. 8

E

E

B1

B2

B3

18

B4

z
y
x

FIG. 9

FIG. 10

<u>100a</u>

FIG. 11

500

520

540

550

560

502

503

FIG. 12

## INTERNATIONAL SEARCH REPORT

International application No.

PCT/JP2011/072240

### A. CLASSIFICATION OF SUBJECT MATTER
*H01R12/71*(2011.01)i, *H01R13/11*(2006.01)i, *H01R13/24*(2006.01)n, *H01R13/46*
(2006.01)n

According to International Patent Classification (IPC) or to both national classification and IPC

### B. FIELDS SEARCHED
Minimum documentation searched (classification system followed by classification symbols)
H01R12/71, H01R13/11, H01R13/24, H01R13/46

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-030868 A  (Hirose Electric Co., Ltd., Mitsubishi Electric Corp.), 02 February 2006 (02.02.2006), entire text; all drawings & US 2007/0122088 A1    & US 7488119 B2 & EP 1780842 A1         & WO 2006/009156 A1 & CN 101019281 A | 1-11 |
| A | JP 2006-331741 A  (Hirose Electric Co., Ltd.), 07 December 2006 (07.12.2006), entire text; all drawings & US 2006/0270283 A1    & EP 1726978 A1 | 1-11 |
| A | JP 2006-344524 A  (Molex Inc.), 21 December 2006 (21.12.2006), entire text; all drawings & WO 2007/110699 A2     & CN 101238613 A | 1-11 |

☒  Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 22 November, 2011 (22.11.11) | Date of mailing of the international search report 06 December, 2011 (06.12.11) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/072240

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/015862 A1  (Mitsumi Electric Co., Ltd.),<br>07 February 2008 (07.02.2008),<br>entire text; all drawings<br>& US 2009/0239420 A1    & EP 2048750 A1<br>& WO 2008/015817 A1 | 1-11 |
| A | JP 2009-277410 A  (Molex Inc.),<br>26 November 2009 (26.11.2009),<br>entire text; all drawings<br>& WO 2009/140324 A1 | 1-11 |
| A | JP 2010-267512 A  (Hirose Electric Co., Ltd.),<br>25 November 2010 (25.11.2010),<br>entire text; all drawings<br>(Family: none) | 1-11 |
| A | JP 2010-267513 A  (Hirose Electric Co., Ltd.),<br>25 November 2010 (25.11.2010),<br>entire text; all drawings<br>(Family: none) | 1-11 |
| A | CD-ROM of the specification and drawings<br>annexed to the request of Japanese Utility<br>Model Application No. 052361/1993(Laid-open<br>No. 018367/1995)<br>(Kel Corp.),<br>31 March 1995 (31.03.1995),<br>entire text; all drawings<br>(Family: none) | 1 |
| A | JP 2001-257041 A  (DDK Ltd.),<br>21 September 2001 (21.09.2001),<br>entire text; all drawings<br>(Family: none) | 1 |
| A | JP 2007-280702 A  (Yokowo Co., Ltd.),<br>25 October 2007 (25.10.2007),<br>entire text; all drawings<br>(Family: none) | 1 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006030868 A